# EUROPEAN PATENT SPECIFICATION

(11) **EP 3 592 277 B1**
(45) Date of publication and mention of the grant of the patent: **25.08.2021**
(21) Application number: 18715308.5
(22) Date of filing: 09.03.2018
(51) Int. Cl.: A61C 1/00, A61C 1/08, A61C 1/18

(54) **POWERED COUPLER FOR DENTAL HANDPIECE**
ANGETRIEBENER KOPPLER FÜR DENTALES HANDSTÜCK
ÉLÉMENT D'ACCOUPLEMENT MOTORISÉ POUR PIÈCE À MAIN DENTAIRE

(30) Priority: 10.03.2017 US 201715456227
(43) Date of publication of application: 15.01.2020
(73) Proprietor: KaVo Dental Technologies, LLC, Charlotte, NC 28273 (US)
(72) Inventor: ST. LOUIS, Robert Thomas, Charlotte, NC 28203 (US); DUNAWAY, Michael Carl, Charlotte, NC 28226 (US); BOHON, Steven, Charlotte, NC 28209 (US)
(74) Representative: Thun, Clemens
(86) International application number: PCT/US2018/021786
(87) International publication number: WO 2018/165573

(56) References cited:
- DE-A1-102008 009 623
- DE-A1-102014 225 324
- US-A- 5 947 729
- US-A1- 2016 058 525

## Description

### BACKGROUND

Embodiments relate to systems and methods for coupling a dental handpiece to a base station.

The DE 10 2014 225 324 A1 and the DE102008009623A1 provide adapters for coupling a dental base station with a dental handpiece, whereby the adapter is coupled via a connection hose to the dental base station, and coupled via a connection hose to the dental handpiece.

### SUMMARY

One embodiment provides a coupling device for selectively coupling a dental handpiece to a dental base station. An electrical power source is housed by the coupling device. A first end of the coupling device is selectively coupleable to the dental base station and configured to receive a gaseous or fluid medium from the dental base station. A second end of the coupling device is selectively coupleable to the dental handpiece and configured to output the gaseous or fluid medium from the dental base station to the dental handpiece and to output electrical power from the electrical power source to the dental handpiece, wherein the electrical power source of the coupling device includes a rechargeable battery and a battery charger.

According to the invention, the electrical power source includes a rechargeable battery and a battery charger. In some embodiments, the battery charger of the electrical power source includes one or more photovoltaic cells mounted on an exterior surface of the coupling device. In other embodiments, the battery charger of the electrical power source includes a thermoelectric generator, an acoustic generator, and air or water-powered generator (e.g., dynamo), or an inductive charging circuit.

In some embodiments, the coupling device includes a coupler body housing that is directly coupleable to a body of the dental handpiece so that the coupler body housing is supported by the dental handpiece during use of the dental handpiece. In other embodiments, the coupling device includes a first length of hose selectively coupleable to the dental base station between a coupler body housing and the dental base station and a second length of hose selectively coupleable to the dental handpiece between the coupler body housing and the dental handpiece.

Another embodiment provides a method of retrofitting a dental handpiece to a dental base station. The dental handpiece requires both electrical power and a gaseous or fluid medium for operation. The dental base station is configured to provide the gaseous or fluid medium to the dental handpiece, but is not configured to provide electrical power to the dental handpiece. The dental base station is coupled to a first end of the coupling device and the dental handpiece is coupled to a second end of the coupling device. The gaseous or fluid medium is conveyed from the dental base station to the dental handpiece through the coupling device. Electrical power is conveyed to the dental handpiece from a power supply housed by the coupling device.

Parts of the description and drawings referring to embodiments which are not covered by the claims are not presented as embodiments of the invention, but as examples useful for understanding the invention.

Other aspects of various embodiments will become apparent by consideration of the detailed description and accompanying drawings.

### BRIEF DESCRIPTION OF THE DRAWINGS

Fig. 1 is a block diagram of a first example of dental system configuration in which a dental handpiece is coupled to a dental base station.
Fig. 2 is a block diagram of a second example of a dental system configuration in which a dental handpiece is coupled to a dental base station.
Fig. 3 is a block diagram of an inventive embodiment of a dental system configuration in which a coupling device is used to couple a dental handpiece to a dental base station.
Fig. 4 is an elevation view of an inventive embodiment of a dental system configuration according to Fig. 3 in which a hose-type coupling device is used to couple the dental handpiece to the dental base station.
Fig. 5 is a partially-transparent perspective view of an inventive coupling device for use in the dental system configuration of Fig. 3 including a wireless charging circuit for charging a battery housed within the coupling device.
Fig. 6 is a partially-transparent perspective view of an inventive coupling device for use in the dental system of Fig. 3 including a photovoltaic device for charging a battery housed within the coupling device.

### DETAILED DESCRIPTION

Before any embodiments are explained in detail, it is to be understood that the embodiments are not limited in their application to the details of construction and the arrangement of components set forth in the following description or illustrated in the following drawings. Embodiments may be practiced and carried out in various ways.

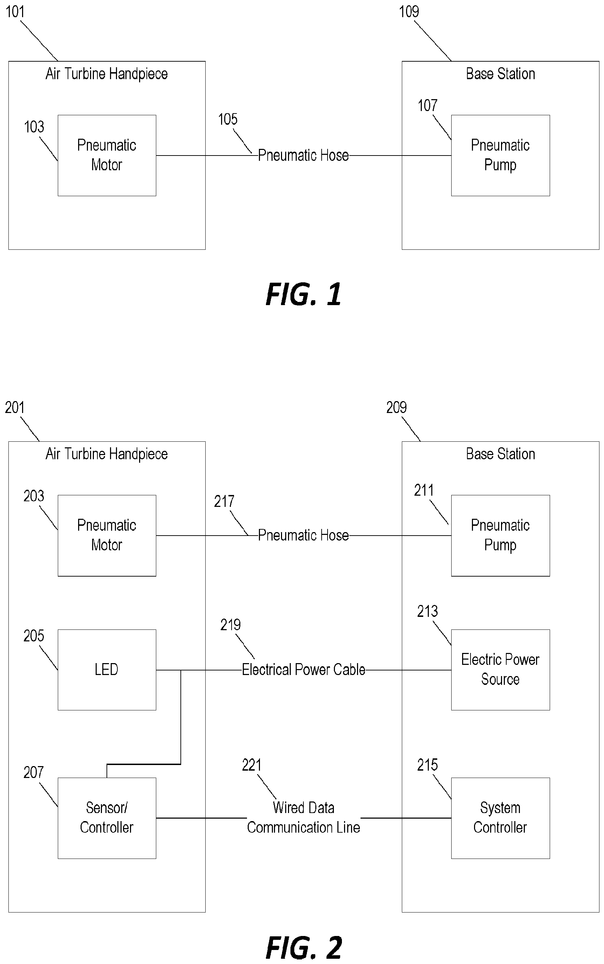

Dental practitioners often use dental handpieces including, for example, an air turbine handpiece or "drill." Fig. 1 illustrates one example of a dental system, which is not part of the claims, including an air turbine handpiece 101. The air turbine handpiece 101 includes a pneumatic motor 103 (e.g., an air-turbine that is configured to rotate when pressurized air moves through the handpiece) that is coupled by a pneumatic hose 105 to a pneumatic pump 107 of a dental base station 109 or "delivery unit." The pneumatic pump 107 provides pressurized air through the pneumatic hose 105 to the pneumatic motor 103 of the air turbine handpiece 101. The operation of the pneumatic motor 103, in turn, causes rotation of a drill tip of the air turbine handpiece 101. In various implementations, the pneumatic pump 107 can be provided as an integral component of the dental base station 109 or as a separate component that is separately coupled to the dental base station and provides pressurized air to the air turbine handpiece 101 (and/or other devices) through the dental base station 103.

The example of Fig. 1 illustrates a simplified system in which only pressurized air is conveyed between the dental base station 109 and the air turbine handpiece 101. In other implementations, one or more additional hoses may be provided for conveyance of another gaseous or fluid medium between the dental handpiece and the dental base station. For example, in addition to the pneumatic hose 105 for operating the pneumatic motor 103, the handpiece 101 in other implementations may also be configured to include a fluid hose for conveying water from the dental base station 109 to the air turbine handpiece 101. The handpiece 101 may then be configured to utilize this water to reduce the temperature of (i.e., "cool") the rotating drill tip or to rinse the mouth of a patient.

In still other implementations, a dental handpiece may include additional components - including, for example, an electronic controller - that require electrical power or a data communication channel. Fig. 2 illustrates an example of an air turbine handpiece 201 that includes a pneumatic motor 203 for causing rotation of the drill tip, a light emitting diode (LED) 205 for illuminating the oral cavity of a patient during use of the air turbine handpiece 201, and one or more sensors or electronic controllers 207 for monitoring conditions including, for example, the operating temperature of the air turbine handpiece and/or controlling the operation of the air turbine handpiece. In the example of Fig. 2, which is not part of this invention, the dental base station 209 includes a pneumatic pump 211, an electric power source 213, and a system controller 215. Similar to the example of Fig. 1, the pneumatic pump 211 is coupled to the pneumatic motor 203 by a pneumatic hose 217 that provides pressurized air to operate the pneumatic motor 203. The electric power source is coupled to the LED 205 and the sensor/controller 207 by an electrical power cable 219 to provide operating power to the components of the air turbine handpiece 201. The system controller 215 is also coupled to the sensor/controller 207 by a wired data communication line 221 to transmit sensor data and/or digital command instructions between the base station 209 and the air turbine handpiece 201. In some implementations, the pneumatic hose 217, the electrical power cable 219, and the wired data communication line 221 are all integrated as different conveyance channels within a single coupling cable between the air turbine handpiece 201 and the base station 209.

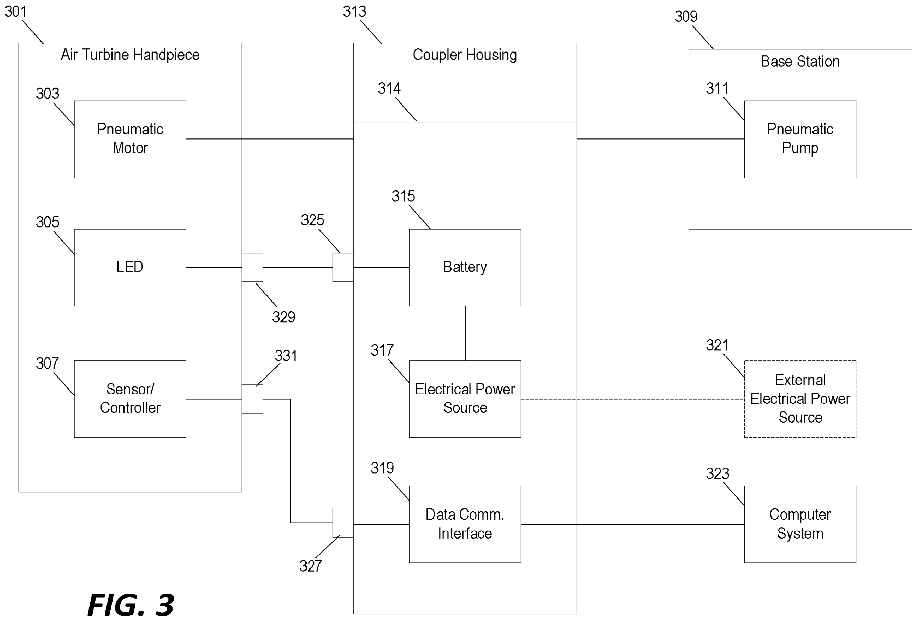

In some dental system configurations, a dental practitioner may desire to use a dental handpiece (for example, the air turbine handpiece 201 of Fig. 2) that includes electrically powered components. However, a base station that is not configured to provide electrical power (for example, the base station 109 of Fig. 1) may be the only base station available. Fig. 3 illustrates an example of a dental system configuration in which a coupling device is used to facilitate a coupled connection between a dental handpiece that requires electrical power and a base station that is not configured to provide power. As in the example of Fig. 2, the configuration of Fig. 3 includes an air turbine handpiece 301 that includes a pneumatic motor 303, an LED 305, and one or more sensors or controllers (for example, sensor/controller 307). However, the base station 309 is only configured to provide pressurized air using a pneumatic pump 311.

The example of Fig. 3 also includes a coupling device 313 coupled between the air turbine handpiece 301 and the base station 309. The coupling device 313 that includes a medium conveyance channel 314 that in one embodiment extends from a first end of the coupling device 313 to a second end of the coupling device. The medium conveyance channel 314 is configured to convey the pressurized air from the pneumatic pump 311 to the pneumatic motor 303 of the air turbine handpiece 301. The coupling device 313 also includes a battery 315, an electrical power source 317, and a data communication interface 319. In some implementations, the first end of the coupling device 313 (or, more particularly, the first end of the medium conveyance channel 314) is selectively coupleable to the base station 309 through a flexible hose. Similarly, in some implementations, the second end of the coupling device 313 (or, more particularly, the second end of the medium conveyance channel 314) is selectively coupleable to the air turbine handpiece 301 through a flexible hose.

The electrical power source 317 generates electrical power that is then stored to the battery 315. During operation of the air turbine handpiece 301, the stored electrical power from the battery 315 is provided to the air turbine handpiece 305 to illuminate the LED 305 and, in some implementations, to provide operating power to the sensor/controller 307. In some implementations, that are related to the current invention, the electrical power source 317 includes a wireless charging device - for example, an inductive charging circuit - that receives electrical power from an external electrical power source 321. In other implementations, the electrical power source 317 includes a circuit or device configured to generate its own electricity. For example, the electrical power source 317 may include one or more photovoltaic cells to capture energy from ambient light (for example, operatory lights used in the room). Alternatively or additionally, the electrical power source 317 may include an acoustic generator (for example, a voice coil) configured to generate electrical power from captured sonic or acoustic energy including, for example, sounds produced by operation of the air turbine handpiece 301 (or other dental handpieces/equipment). Other implementations may include an air-powered or water-powered generator (e.g., dynamo) as the electrical power source 317 configured to generate electricity from the movement of the fluid or gaseous medium moving through the coupling device 313.

In still other implementations, the electrical power source 317 includes a thermoelectric (for example, Peltier) generator configured to capture thermal energy and convert it to electrical power. The thermoelectric generator may be configured to generate electricity from thermal heat given off by the hand of the dental practitioner holding and operating the air turbine handpiece 301. As some thermoelectric generators utilize a "hot side" and a "cool side and generate electricity from the temperature differential between the hot side and cool side, the coupling device 313 may be configured to position a hot side contact at a location where it will receive heat from the hand of the operator and to position a cool side contact at a location proximal to the medium conveyance channel allowing the temperature of the cool side contact to be regulated by the air/water supplied through the coupling device to the air turbine handpiece 301. Accordingly, in some implementations, the hot side contact of the thermoelectric generator is positioned and configured to be warmed by the hand of the operator of the dental handpiece when the dental handpiece is in use and the cool side contact of the thermoelectric generator is positioned and configured to be cooled by the fluid medium conveyed through the coupling device. Conversely, in implementations where the liquid conveyed through the coupling device 313 is heated and expected to be warmer than the ambient air or the hand of the operator, the hot side contact may be positioned and configured to be warmed by the fluid medium conveyed through the coupling device and the cool side contact is positioned and configured to be "cooled" by the hand of the operator or by the ambient air.

The data communication interface 319 can include either a wired or wireless interface to transmit data or otherwise facilitating data transfer between the sensor/controller 307 of the air turbine handpiece 301 and an external computer system 323. The data communication interface 319 can include, for example, a wireless data transceiver configured to communicate using one or more communication protocols including, for example, Bluetooth, Wi-Fi, NFC, or other standardized or proprietary wireless communication protocols configured to communicatively couple the wireless data transceiver to the air turbine handpiece 301. In implementations that provide for wired data communication between the coupling device 313 and the external computer system 323, the data communication interface 319 may include a wired data port incorporated into the exterior housing of the coupling device 313 that is selectively connectable to the external computer system 323 (for example, through a standard Ethernet cable, USB cable, or other cable type).

The housing, position, and appearance of the coupling device 313 can vary in different implementations. For example, in the implementation illustrated in Fig. 3, the coupling device 313 includes an electrical power output connector 325 and a data connector 327. When the coupling device 313 is connected to the air turbine handpiece 301, the electrical power output connector 325 and the data connector 327 of the coupling device 313 are connected to an electrical power input connector 329 and a second data connector 331 of the air turbine handpiece 301, respectively, either directly or through a cable. When the electrical power output connector 325 is coupled to the electrical power input connector 329, electrical power from the battery 315 is provided to the LED 305 or other electronic components of the air turbine handpiece 301. Similarly, when the data connector 327 of the coupling device 313 is connected to the second data connector 331 of the air turbine handpiece 301, a wired communication link is established between the data communication interface 319 of the coupling device 313 and the air turbine handpiece 301.

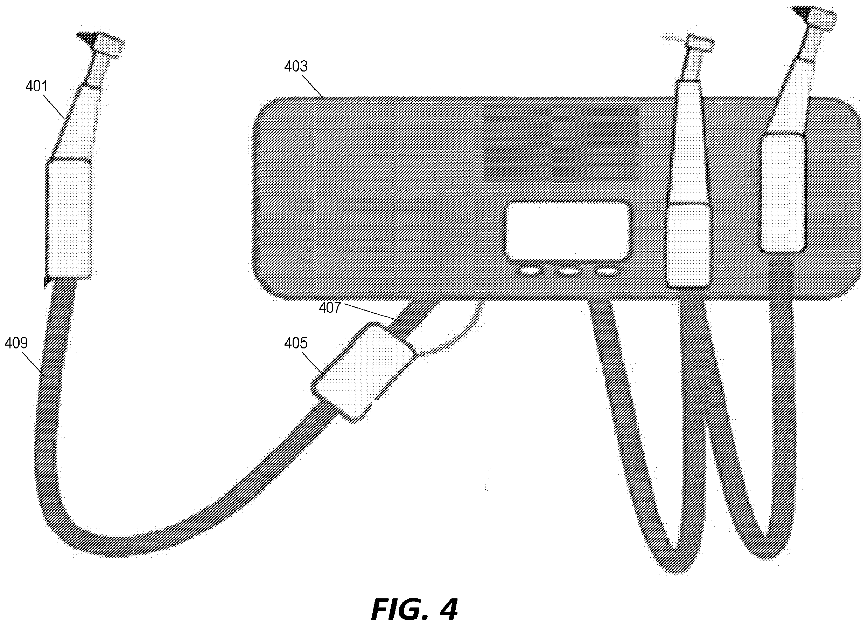

Fig. 4 illustrates another example where the dental handpiece 401 is connected to the dental base station 403 with a configuration that includes a coupler housing 405. A first end of the coupler housing 405 is connected to the dental base station 407 by a first length of hose 407 (for example, a flexible hose). A second end of the coupler housing 405 (opposite the first end) is connected to the dental handpiece 401 by a second length of hose 409 (for example, a flexible hose). In this example, the coupler housing 405 includes a medium conveyance channel (for example, medium conveyance channel 314 from the example of Fig. 3) allowing pressurized air to pass from the dental base station 403, through the first length of hose 407, through the coupler housing 405, through the second length of hose 409, and ultimately to the dental handpiece 401. The second length of hose 409 includes a pressurized air channel (for example, pneumatic hose 217 from the example of Fig. 2), an electrical power cable (for example, electrical power cable 219 from the example of Fig. 2), and a wired data communication line (for example, wired data communication line 221 from the example of Fig. 2) integrated as separate channels or lines in a single hose. However, because the base station 403 is not configured to provide electrical power or to facilitate data communication, in some implementations, the first length of hose 407 does not include the electrical power cable or the wired data communication line. Accordingly, in some implementations, the first length of hose 407 includes only a pneumatic hose.

In the example of Fig. 4, the first length of hose 407 is significantly shorter than the second length of hose 409. By this configuration, the weight of the coupler housing 405 and the components housed inside is supported primarily by the dental base station 403 through the first length of hose 407 and less of the weight must be supported by the operator of the dental handpiece 401 during use. In still other implementations, the coupler housing 405 is configured to be coupled to the dental base station 403 by a mechanism other than the first length of hose 407 itself. For example, in some implementations, the coupler housing 405 may be directly coupleable to the dental base station 403 with a first length of hose 407 and, in other implementations, a support linkage (e.g., a chain or wire cable) may be provided to couple coupler housing 405 to the dental base station 403 so that the weight of the coupler housing 405 is supported by the support linkage and not by the first length of hose 407.

In some implementations, the system configuration illustrated in Fig. 4 provides for advances features to be incorporated into the dental handpiece 401 while simplifying the construction of the dental base station 403. For example, rather than using a complex base station to collect and monitor sensor data from the sensor/controller of the dental handpiece, the dental handpiece 401 in the example of Fig. 4 can be configured to communicate wirelessly with a desktop/laptop computer, a tablet computer, a smart phone, or other external computing device to provide this and other functionality.

In other implementations, the coupling device of Fig. 4 can be used for retrofitting purposes to provide the full functionality of an advanced electrically-powered dental handpiece 401 with an older dental base station 403. For example, the coupling device illustrated in Fig. 4 can be used to couple the base station 109 of Fig. 1 to the air turbine handpiece 201 of Fig. 2. In this example of a retrofitting arrangement, the pneumatic hose 105 of Fig. 1 can be used as the first length of hose 407 shown in Fig. 4 connecting the coupler housing 405 to the dental base station 403. Similarly, a combined hose/coupling cable including the pneumatic hose 217, the electrical power cable 219, and the wired data communication line 221 from the example of Fig. 2 can be used as the second length of hose 409 shown in Fig. 4 connecting the coupler housing 405 to the dental handpiece 401.

In some implementations (whether designed for retrofitting or otherwise), the coupler housing 405 may be fixedly connected to both the first length of hose 407 and the second length of hose 409. Accordingly, in some implementations of this type, a single continuous pneumatic hose runs through the first length of hose 407, the coupler housing 405, and the second length of hose 409. In other implementations, the coupler housing 405 is fixedly connected to the second length of hose 409, but selectively coupleable to the first length of hose 407, or, similarly, the coupler housing 405 is fixedly connected to the first length of hose 407, but selectively coupleable to the second length of hose 409. In still other implementations, the coupler housing 405 is selectively coupleable to both the first length of hose 407 and the second length of hose 409 as in the retrofitting example discussed above.

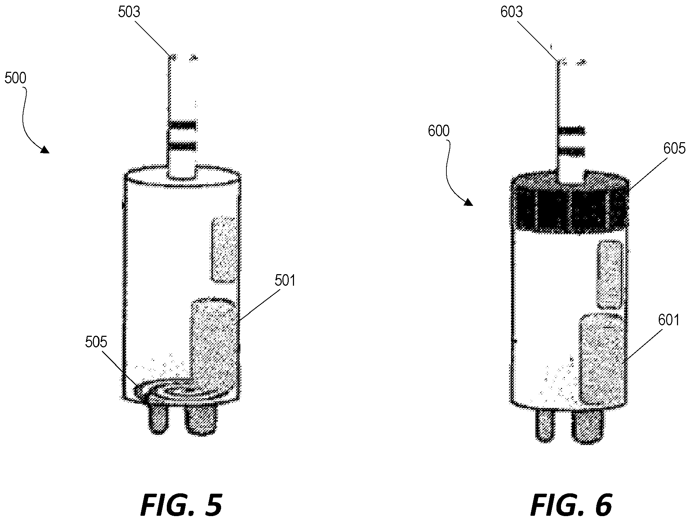

In the example of Fig. 4, the coupler housing 405 is supported by or integrated into the hose connecting the dental handpiece 401 to the dental base station 403. However, in other implementations, a coupler housing containing, for example, the battery 315, the electrical power source 317, and the data communication interface 319 as illustrated in Fig. 3 is directly coupleable to and directly supported by either the dental handpiece 401 or the dental base station 403. For example, Figs. 5 and 6 illustrate examples of coupler body housings that are configured to attach directly to the base of a dental handpiece and, accordingly, will be held by the operator during use of the dental handpiece. Because the coupler body housings as illustrated in the examples of Figs. 5 and 6 attached directly to the dental handpiece, only a single length of hose is required to connect the coupler body housing to the base station. As used in this patent application, the phrase "coupler body housing" refers to a type of coupler housing that attaches directly to the body of either the dental handpiece or the dental base station.

Fig. 5 illustrates a first example of a coupler body housing 500. A battery 501 is positioned within the coupler body housing 500 to provide electrical power to an LED 503. The coupler body housing 500 also includes a wireless charging coil 505 that is configured to charge the battery 501. Because the coupler body housing 500 in this example is directly attachable to the dental handpiece, in some implementations, a corresponding mating charger is integrated into an instrument holder and configured to induce an electrical current in the wireless charging coil 505 (for example, by inductive charging) when the dental handpiece is placed in the instrument holder while not in use.

Fig. 6 illustrates another example of a coupler body housing 600 that also includes a battery 601 to provide electrical power to an LED 603. However, instead of a wireless charging coil, the coupler body housing 600 includes a series of photovoltaic (i.e., solar) cells 605 arranged around the circumference of the cylindrical shaped coupler body housing 600. The photovoltaic cells 605 generate electrical power to charge the battery 601 when exposed to light (for example, from the operatory lights used during operation of the dental handpiece). As discussed above, the photovoltaic cells 605 in the coupler body housing 600 of Fig. 6 is only one example of a type of electrical power source that can be incorporated into the coupler body housing to charge the battery. In other implementations, the coupler body housing 600 can instead be equipped with, for example, a thermoelectric generator (for example, a Peltier generator) or an acoustic generator (for example, a voice coil).

In the examples discussed above in reference to Figs. 3 and 4, an LED is integrated into the dental handpiece and is "electrically coupled" to the coupling device by an electric cable that conveys electrical power from the battery of the coupling device to the LED of the dental handpiece. However, according to the invention, an electrical component/device is provided as a part of the coupling device and is "operatively coupled" to the dental handpiece. For example, in the coupling body housing of Fig. 5, the LED 503 is provided as part of the coupling device and is operatively coupled to the dental handpiece by a fiber optic cable that conveys light emitted by the LED 503 in the coupling body housing into the dental handpiece where the light is output for use (for example, to illuminate the oral cavity during use of an air turbine handpiece). In other implementations, an LED or other electrical device/component may be positioned, for example, in the coupler housing 405 of Fig. 4 and operatively coupled to the dental handpiece 401 (for example, by a fiber optic cable) through the second length of hose 409. In still other implementations, types of electrical devices/components other than an LED are provided as part of the coupling device and are operatively coupled to the dental handpiece by mechanisms other than a fiber optic cable.

Thus, embodiments provide, among other things, a coupling device with an integrated electrical power source for selectively coupling a dental handpiece to a dental base station. Various features and advantages of the certain embodiments are set forth in the following claims.

## Claims

1. A coupling device (313) for selectively coupling a dental handpiece (101, 201, 301, 401) to a dental base station (109, 209, 309, 403), the coupling device (313) comprising:
• a first end selectively coupleable to the dental base station (109, 209, 309, 403) and configured to receive a gaseous or fluid medium from the dental base station (109, 209, 309, 403);
• an electrical power source (317) housed by the coupling device (313); and
• a second end selectively coupleable to the dental handpiece (101, 201, 301, 401) and configured to output the gaseous or fluid medium from the dental base station (109, 209, 309, 403) to the dental handpiece (101, 201, 301, 401) and to output electrical power from the electrical power source (317) to the dental handpiece (101, 201, 301, 401),
**characterized in that** the electrical power source (317) of the coupling device (313) includes a rechargeable battery (315) and a battery charger.

2. The coupling device of claim 1, further comprising a medium conveyance channel (314) extending from the first end to the second end and configured to convey the gaseous or fluid medium from the dental base station (109, 209, 309, 403) to the dental handpiece (101, 201, 301, 401) when the first end is coupled to the dental base station (109, 209, 309, 403) and the second end is coupled to the dental handpiece (101, 201, 301, 401).

3. The coupling device of claim 1, further comprising an electrical power output connector (325) positioned proximal to the second end of the coupling device (313), coupled to the electrical power source (317), and configured to couple to an electrical power input connector (329) of the dental handpiece when the second end is coupled to the dental handpiece (101, 201, 301, 401).

4. The coupling device of claim 1, wherein the battery charger includes one or more photovoltaic cells (605) mounted on an exterior surface of the coupling device (313).

5. The coupling device of claim 1, wherein the battery charger includes thermoelectric generator configured to generate electrical power used to charge the rechargeable battery (315) from an electrical current generated from a temperature differential between components of the dental handpiece (101, 201, 301, 401).

6. The coupling device of claim 5, wherein the first end is configured to receive a fluid medium from the dental base station (109, 209, 309, 403) and the second end is configured to output the fluid medium from the dental base station (109, 209, 309, 403) to the dental handpiece (101, 201, 301, 401),
wherein the thermoelectric generator includes a hot side contact and a cool side contact and generates the electrical current from the temperature differential between the hot side contact and the cool side contact,
wherein the hot side contact of the thermoelectric generator is positioned and configured to be warmed by the hand of an operator of the dental handpiece (101, 201, 301, 401) when the second end of the coupling device (313) is coupled to the dental handpiece (101, 201, 301, 401) and the dental handpiece (101, 201, 301, 401) is in use, and
wherein the cool side contact of the thermoelectric generator is positioned and configured to be cooled by the fluid medium conveyed through the coupling device (313) from the dental base station (109, 209, 309, 403) to the dental handpiece (101, 201, 301, 401).

7. The coupling device of claim 1, wherein the battery charger includes an inductive charging circuit configured to charge the rechargeable battery (315) using electrical power from an external electrical power source (321).

8. The coupling device of claim 1, wherein the battery charger includes an acoustic generator configured to capture acoustic energy from sound produced by operation of the dental handpiece (101, 201, 301, 401) and to convert the acoustic energy into an electrical current.

9. The coupling device of claim 1, further comprising a wireless data transceiver and a data connector (327),
wherein the data connector (327) is positioned proximal to the second end of the coupling device (313), coupled to the wireless data transceiver, and configured to communicatively couple the wireless data transceiver to the dental handpiece (101, 201, 301, 401) when the second end is coupled to the dental handpiece (101, 201, 301, 401), and
wherein the wireless data transceiver is configured to provide communication between the dental handpiece (101, 201, 301, 401) and an external computer system (323) when the coupling device (313) is coupled to the dental handpiece (101, 201, 301, 401).

10. The coupling device of claim 1, further comprising a wired data port and a data connector (327),
wherein the data connector (327) is positioned proximal to the second end of the coupling device (313), coupled to the wired data port, and configured to establish a wired communication link between the wired data port and the dental handpiece (101, 201, 301, 401) when the second end is coupled to the dental handpiece (101, 201, 301, 401),
wherein the wired data port is selectively connectable to an external computer system (323) through a wired connection, and
wherein the wired data port is configured to provide communication between the dental handpiece (101, 201, 301, 401) and the external computer system (323) when the coupling device (313) is coupled to the dental handpiece (101, 201, 301, 401) and the wired data port is coupled to the external computer system (323).

11. The coupling device of claim 1, further comprising a coupler body housing (500, 600) including the first end and the second end, wherein the electrical power source (317) is housed by the coupler body housing (500, 600),
wherein the second end is directly coupleable to a body of the dental handpiece (101, 201, 301, 401) and is supported by the dental handpiece (101, 201, 301, 401) during use of the dental handpiece (101, 201, 301, 401), and
wherein the first end is coupleable to the dental base station (109, 209, 309, 403) through a flexible hose configured to convey the gaseous or fluid medium from the dental base station (109, 209, 309, 403) to the first end of the coupling device (313).

12. The coupling device of claim 1, further comprising a coupler housing (405) selectively coupleable to the dental base station (109, 209, 309, 403) such that, when coupled to the dental base station (109, 209, 309, 403), the weight of the coupler housing (405) is support by the dental base station (109, 209, 309, 403), and
wherein the electrical power source (317) is housed by the coupler housing (405).

13. The coupling device of claim 1, further comprising a coupler housing (405) fixedly coupled to a first length of hose (407), wherein the electrical power source (, 317) is housed by the coupler housing (405),
wherein the coupler housing (405) is selectively coupleable to a second length of hose (409) coupling the first end of the coupling device (313) to the dental base station (109, 209, 309, 403) and configured to convey the gaseous or fluid medium from the dental base station (109, 209, 309, 403) to the first end of the coupling device (313), and
wherein the first length of hose (407) is selectively coupleable directly to the dental handpiece (101, 201, 301, 401) and configured to convey the gaseous or fluid medium from the coupler housing (405) to the dental handpiece (101, 201, 301, 401).

14. The coupling device of claim 1, further comprising a coupler housing (405) including the first end and the second end of the coupling device (313),
wherein the first end of the coupler housing (405) is selectively coupleable to a first hose coupling the coupler housing (405) to the dental base station (109, 209, 309, 403), and
wherein the second end of the coupler housing (405) is selectively coupleable to a second hose coupling the coupler housing (405) to the dental handpiece (101, 201, 301, 401).

## Patentansprüche

1. Kopplungsvorrichtung (313) zum selektiven Koppeln eines dentalen Handstücks (101, 201, 301, 401) mit einer dentalen Basisstation (109, 209, 309, 403), wobei die Kopplungsvorrichtung (313) aufweist:
- ein erstes Ende, das selektiv mit der dentalen Basisstation (109, 209, 309, 403) koppelbar ist und konfiguriert ist, um ein gasförmiges oder flüssiges Medium von der dentalen Basisstation (109, 209, 309, 403) zu empfangen;
- eine elektrische Leistungsquelle (317), die von der Kopplungsvorrichtung (313) aufgenommen wird; und
- ein zweites Ende, das selektiv mit dem dentalen Handstück (101, 201, 301, 401) koppelbar ist und konfiguriert ist, um das gasförmige oder flüssige Medium von der dentalen Basisstation (109, 209, 309, 403) an das dentale Handstück (101, 201, 301, 401) auszugeben und um elektrische Leistung von der elektrischen Leistungsquelle (317) an das dentale Handstück (101, 201, 301, 401) auszugeben, **dadurch gekennzeichnet, dass** die elektrische Leistungsquelle (317) der Kopplungsvorrichtung (313) eine wiederaufladbare Batterie (315) und ein Batterieladegerät umfasst.

2. Kopplungsvorrichtung nach Anspruch 1, die ferner einen Medienförderkanal (314) aufweist, der sich von dem ersten Ende zu dem zweiten Ende erstreckt und konfiguriert ist, um das gasförmige oder flüssige Medium von der dentalen Basisstation (109, 209, 309, 403) zu dem dentalen Handstück (101, 201, 301, 401) zu befördern, wenn das erste Ende mit der dentalen Basisstation (109, 209, 309, 403) gekoppelt ist und das zweite Ende mit dem dentalen Handstück (101, 201, 301, 401) gekoppelt ist.

3. Kopplungsvorrichtung nach Anspruch 1, die ferner einen elektrischen Leistungsausgangsverbinder (325) umfasst, der proximal zu dem zweiten Ende der Kopplungsvorrichtung (313) positioniert ist, der mit der elektrischen Leistungsquelle (317) gekoppelt ist und konfiguriert ist, um mit einem elektrischen Leistungseingangsverbinder (329) des dentalen Handstücks zu koppeln, wenn das zweite Ende mit dem dentalen Handstück (101, 201, 301, 401) gekoppelt ist.

4. Kopplungsvorrichtung nach Anspruch 1, wobei das Batterieladegerät eine oder mehrere Photovoltaikzellen (605) umfasst, die auf einer Außenoberfläche der Kopplungsvorrichtung (313) montiert sind.

5. Kopplungsvorrichtung nach Anspruch 1, wobei das Batterieladegerät einen thermoelektrischen Generator aufweist, der konfiguriert ist, um elektrische Leistung zu erzeugen, die verwendet wird, um die wiederaufladbare Batterie (315) mit einem elektrischen Strom, der aus einer Temperaturdifferenz zwischen Komponenten des dentalen Handstücks (101, 201, 301, 401) erzeugt wird, zu laden.

6. Kopplungsvorrichtung nach Anspruch 5, wobei das erste Ende konfiguriert ist, um ein flüssiges Medium von der dentalen Basisstation (109, 209, 309, 403) zu empfangen, und das zweite Ende konfiguriert ist, um das flüssige Medium von der dentalen Basisstation (109, 209, 309, 403) zu dem dentalen Handstück (101, 201, 301, 401) auszugeben,
wobei der thermoelektrische Generator einen heißseitigen Kontakt und einen kaltseitigen Kontakt umfasst und den elektrischen Strom aus der Temperaturdifferenz zwischen dem heißseitigen Kontakt und dem kaltseitigen Kontakt erzeugt,
wobei der heißseitige Kontakt des thermoelektrischen Generators derart positioniert und konfiguriert ist, dass er von der Hand eines Bedieners des dentalen Handstücks (101, 201, 301, 401) erwärmt wird, wenn das zweite Ende der Kopplungsvorrichtung (313) mit dem dentalen Handstück (101, 201, 301, 401) gekoppelt ist und das dentale Handstück (101, 201, 301, 401) in Verwendung ist, und
wobei der kaltseitige Kontakt des thermoelektrischen Generators derart positioniert und konfiguriert ist, dass er von dem flüssigen Medium, das durch die Kopplungsvorrichtung (313) von der dentalen Basisstation (109, 209, 309, 403) zu dem dentalen Handstück (101, 201, 301, 401) befördert wird, gekühlt wird.

7. Kopplungsvorrichtung nach Anspruch 1, wobei das Batterieladegerät eine induktive Ladeschaltung umfasst, die konfiguriert ist, um die wiederaufladbare Batterie (315) unter Verwendung elektrischer Leistung von einer elektrischen Leistungsquelle (321) zu laden.

8. Kopplungsvorrichtung nach Anspruch 1, wobei das Batterieladegerät einen akustischen Generator umfasst, der konfiguriert ist, um akustische Energie aus dem Schall, der durch den Betrieb des dentalen Handstücks (101, 201, 301, 401) erzeugt wird, einzufangen und die akustische Energie in einen elektrischen Strom umzuwandeln.

9. Kopplungsvorrichtung nach Anspruch 1, die ferner einen drahtlosen Datentransceiver und einen Datenverbinder (327) aufweist,
wobei der Datenverbinder (327) proximal zu dem zweiten Ende der Kopplungsvorrichtung (313) positioniert ist, mit dem drahtlosen Datentransceiver gekoppelt ist und konfiguriert ist, um den drahtlosen Datentransceiver kommunikationsfähig mit dem dentalen Handstück (101, 201, 301, 401) zu koppeln, wenn das zweite Ende mit dem dentalen Handstück (101, 201, 301, 401) gekoppelt ist, und
wobei der drahtlose Datentransceiver konfiguriert ist, um die Kommunikation zwischen dem dentalen Handstück (101, 201, 301, 401) und einem externen Computersystem (323) bereitzustellen, wenn die Kopplungsvorrichtung (313) mit dem dentalen Handstück (101, 201, 301, 401) gekoppelt ist.

10. Kopplungsvorrichtung nach Anspruch 1, die ferner einen verdrahteten Datenanschluss und einen Datenverbinder (327) aufweist,
wobei der Datenverbinder (327) proximal zu dem zweiten Ende der Kopplungsvorrichtung (313) positioniert ist, die mit dem verdrahteten Datenanschluss gekoppelt ist, und konfiguriert ist, um eine verdrahtete Kommunikationsverbindung zwischen dem verdrahteten Datenanschluss und dem dentalen Handstück (101, 201, 301, 401) einzurichten, wenn das zweite Ende mit dem dentalen Handstück (101, 201, 301, 401) gekoppelt ist,
wobei der verdrahtete Datenanschluss durch eine verdrahtete Verbindung selektiv mit einem externen Computersystem (323) verbindbar ist, und
wobei der verdrahtete Datenanschluss konfiguriert ist, um die Kommunikation zwischen dem dentalen Handstück (101, 201, 301, 401) und dem externen Computersystem (323) bereitzustellen, wenn die Kopplungsvorrichtung (313) mit dem dentalen Handstück (101, 201, 301, 401) gekoppelt ist und der verdrahtete Datenanschluss mit dem externen Computersystem (323) gekoppelt ist.

11. Kopplungsvorrichtung nach Anspruch 1, die ferner ein Kopplerkörpergehäuse (500, 600) aufweist, welches das erste Ende und das zweite Ende umfasst, wobei die elektrische Leistungsquelle (317) durch das Kopplerkörpergehäuse (500, 600) aufgenommen wird,
wobei das zweite Ende direkt mit einem Körper des dentalen Handstücks (101, 201, 301, 401) koppelbar ist und während der Verwendung des dentalen Handstücks (101, 201, 301, 401) von dem dentalen Handstück (101, 201, 301, 401) gehalten wird, und
wobei das erste Ende durch einen flexiblen Schlauch mit der dentalen Basisstation (109, 209, 309, 403) koppelbar ist, um das gasförmige oder flüssige Medium von der dentalen Basisstation (109, 209, 309, 403) zu dem ersten Ende der Kopplungsvorrichtung (313) zu befördern.

12. Kopplungsvorrichtung nach Anspruch 1, die ferner ein Kopplergehäuse (405) aufweist, das selektiv mit der dentalen Basisstation (109, 209, 309, 403) koppelbar ist, so dass das Gewicht des Kopplergehäuses (405), wenn es mit der dentalen Basisstation (109, 209, 309, 403) gekoppelt ist, von der dentalen Basisstation (109, 209, 309, 403) gehalten wird, und
wobei die elektrische Leistungsquelle (317) von dem Kopplergehäuse (405) aufgenommen wird.

13. Kopplungsvorrichtung nach Anspruch 1, die ferner ein Kopplergehäuse (405) aufweist, das fest mit einer ersten Schlauchlänge (407) gekoppelt ist, wobei die elektrische Leistungsquelle (317) von dem Kopplergehäuse (405) aufgenommen wird,
wobei das Kopplergehäuse (405) selektiv mit einer zweiten Schlauchlänge (409) koppelbar ist, die das erste Ende der Kopplungsvorrichtung (313) mit der dentalen Basisstation (109, 209, 309, 403) koppelt und konfiguriert ist, um das gasförmige oder flüssige Medium von der dentalen Basisstation (109, 209, 309, 403) zu dem ersten Ende der Kopplungsvorrichtung (313) zu befördern, und
wobei die erste Schlauchlänge (407) selektiv direkt mit dem dentalen Handstück (101, 201, 301, 401) koppelbar ist und konfiguriert ist, um das gasförmige oder flüssige Medium von dem Kopplergehäuse (405) zu dem dentalen Handstück (101, 201, 301, 401) zu befördern.

14. Kopplungsvorrichtung nach Anspruch 1, die ferner ein Kopplergehäuse (405) aufweist, welches das erste Ende und das zweite Ende der Kopplungsvorrichtung (313) umfasst,
wobei das erste Ende des Kopplergehäuses (405) selektiv mit einem ersten Schlauch, der das Kopplergehäuse (405) mit der dentalen Basisstation (109, 209, 309, 403) koppelt, koppelbar ist, und
wobei das zweite Ende des Kopplergehäuses (405) selektiv mit einem zweiten Schlauch, der das Kopplergehäuse (405) mit dem dentalen Handstück (101, 201, 301, 401) koppelt, koppelbar ist.

## Revendications

1. Dispositif d'accouplement (313) pour coupler sélectivement une pièce à main dentaire (101, 201, 301, 401) à une station de base dentaire (109, 209, 309, 403), le dispositif d'accouplement (313) comprenant :
• une première extrémité pouvant être couplée sélectivement à la station de base dentaire (109, 209, 309, 403) et configurée pour recevoir un milieu gazeux ou fluide à partir de la station de base dentaire (109, 209, 309, 403) ;
• une source d'énergie électrique (317) accueillie par le dispositif d'accouplement (313) ; et
• une deuxième extrémité pouvant être couplée sélectivement à la pièce à main dentaire (101, 201, 301, 401) et configurée pour délivrer en sortie le milieu gazeux ou fluide à partir de la station de base dentaire (109, 209, 309, 403) à la pièce à main dentaire (101, 201, 301, 401) et pour délivrer en sortie l'énergie électrique à partir de la source d'énergie électrique (317) à la pièce à main dentaire (101, 201, 301, 401),
**caractérisé en ce que** la source d'énergie électrique (317) du dispositif d'accouplement (313) comporte une batterie rechargeable (315) et un chargeur de batterie.

2. Dispositif d'accouplement de la revendication 1, comprenant en outre un canal d'acheminement de milieu (314) s'étendant de la première extrémité à la deuxième extrémité et configuré pour acheminer le milieu gazeux ou fluide à partir de la station de base dentaire (109, 209, 309, 403) à la pièce à main dentaire (101, 201, 301, 401) lorsque la première extrémité est couplée à la station de base dentaire (109, 209, 309, 403) et la deuxième extrémité est couplée à la pièce à main dentaire (101, 201, 301, 401).

3. Dispositif d'accouplement de la revendication 1, comprenant en outre un connecteur de sortie d'énergie électrique (325) positionné à proximité de la deuxième extrémité du dispositif d'accouplement (313), couplé à la source d'énergie électrique (317), et configuré pour se coupler à un connecteur d'entrée d'énergie électrique (329) de la pièce à main dentaire lorsque la deuxième extrémité est couplée à la pièce à main dentaire (101, 201, 301, 401).

4. Dispositif d'accouplement de la revendication 1, dans lequel le chargeur de batterie comporte une ou plusieurs cellule(s) photovoltaïque(s) (605) montée(s) sur une surface extérieure du dispositif d'accouplement (313).

5. Dispositif d'accouplement de la revendication 1, dans lequel le chargeur de batterie comporte un générateur thermoélectrique configuré pour générer de l'énergie électrique utilisée pour charger la batterie rechargeable (315) à partir d'un courant électrique généré à partir d'un différentiel de température entre les composants de la pièce à main dentaire (101, 201, 301, 401).

6. Dispositif d'accouplement de la revendication 5, dans lequel la première extrémité est configurée pour recevoir un milieu fluide à partir de la station de base dentaire (109, 209, 309, 403) et la deuxième extrémité est configurée pour délivrer en sortie le milieu fluide à partir de la station de base dentaire (109, 209, 309, 403) à la pièce à main dentaire (101, 201, 301, 401),
dans lequel le générateur thermoélectrique comporte un contact côté chaud et un contact côté froid et génère le courant électrique à partir du différentiel de température entre le contact côté chaud et le contact côté froid,
dans lequel le contact côté chaud du générateur thermoélectrique est positionné et configuré pour être réchauffé par la main d'un opérateur de la pièce à main dentaire (101, 201, 301, 401) lorsque la deuxième extrémité du dispositif d'accouplement (313) est couplée à la pièce à main dentaire (101, 201, 301, 401) et la pièce à main dentaire (101, 201, 301, 401) est en cours d'utilisation, et
dans lequel le contact côté froid du générateur thermoélectrique est positionné et configuré pour être refroidi par le milieu fluide acheminé à travers le dispositif d'accouplement (313) à partir de la station de base dentaire (109, 209, 309, 403) à la pièce à main dentaire (101, 201, 301, 401).

7. Dispositif d'accouplement de la revendication 1, dans lequel le chargeur de batterie comporte un circuit de charge inductif configuré pour charger la batterie rechargeable (315) en utilisant l'énergie électrique provenant d'une source d'énergie électrique externe (321).

8. Dispositif d'accouplement de la revendication 1, dans lequel le chargeur de batterie comporte un générateur acoustique configuré pour capter l'énergie acoustique à partir du son produit par le fonctionnement de la pièce à main dentaire (101, 201, 301, 401) et pour convertir l'énergie acoustique en un courant électrique.

9. Dispositif d'accouplement de la revendication 1, comprenant en outre un émetteur-récepteur de données sans fil et un connecteur de données (327),
dans lequel le connecteur de données (327) est positionné à proximité de la deuxième extrémité du dispositif d'accouplement (313), couplé à l'émetteur-récepteur de données sans fil, et configuré pour coupler en communication l'émetteur-récepteur de données sans fil à la pièce à main dentaire (101, 201, 301, 401) lorsque la deuxième extrémité est couplée à la pièce à main dentaire (101, 201, 301, 401), et
dans lequel l' émetteur-récepteur de données sans fil est configuré pour fournir une communication entre la pièce à main dentaire (101, 201, 301, 401) et un système informatique externe (323) lorsque le dispositif d'accouplement (313) est couplé à la pièce à main dentaire (101, 201, 301, 401).

10. Dispositif d'accouplement de la revendication 1, comprenant en outre un port de données câblé et un connecteur de données (327),
dans lequel le connecteur de données (327) est positionné à proximité de la deuxième extrémité du dispositif d'accouplement (313), couplé au port de données câblé, et configuré pour établir une liaison de communication câblée entre le port de données câblé et la pièce à main dentaire (101, 201, 301, 401) lorsque la deuxième extrémité est couplée à la pièce à main dentaire (101, 201, 301, 401),
dans lequel le port de données câblé peut être connecté de manière sélective à un système informatique externe (323) par l'intermédiaire d'une connexion câblée, et
dans lequel le port de données câblé est configuré pour fournir une communication entre la pièce à main dentaire (101, 201, 301, 401) et le système informatique externe (323) lorsque le dispositif d'accouplement (313) est couplé à la pièce à main dentaire (101, 201, 301, 401) et le port de données câblé est couplé au système informatique externe (323).

11. Dispositif d'accouplement de la revendication 1, comprenant en outre un boîtier de corps d'élément d'accouplement (500, 600) comportant la première extrémité et la deuxième extrémité, dans lequel la source d'énergie électrique (317) est accueillie par le boîtier de corps d'élément d'accouplement (500, 600),
dans lequel la deuxième extrémité peut être couplée directement à un corps de la pièce à main dentaire (101, 201, 301, 401) et est supportée par la pièce à main dentaire (101, 201, 301, 401) pendant l'utilisation de la pièce à main dentaire (101, 201, 301, 401), et
dans lequel la première extrémité peut être couplée à la station de base dentaire (109, 209, 309, 403) à travers un tuyau flexible configuré pour acheminer le milieu gazeux ou fluide à partir de la station de base dentaire (109, 209, 309, 403) à la première extrémité du dispositif d'accouplement (313).

12. Dispositif d'accouplement de la revendication 1, comprenant en outre un boîtier d'élément d'accouplement (405) pouvant être couplé sélectivement à la station de base dentaire (109, 209, 309, 403) de sorte que, lorsqu'il est couplé à la station de base dentaire (109, 209, 309, 403), le poids du boîtier d'élément d'accouplement (405) soit supporté par la station de base dentaire (109, 209, 309, 403), et
dans lequel la source d'énergie électrique (317) est accueillie par le boîtier d'élément d'accouplement (405).

13. Dispositif d'accouplement de la revendication 1, comprenant en outre un boîtier d'élément d'accouplement (405) couplé de manière fixe à une première longueur de tuyau (407), dans lequel la source d'énergie électrique (317) est accueillie par le boîtier d'élément d'accouplement (405),
dans lequel le boîtier d'élément d'accouplement (405) peut être couplé sélectivement à une deuxième longueur de tuyau (409) couplant la première extrémité du dispositif d'accouplement (313) à la station de base dentaire (109, 209, 309, 403) et configuré pour acheminer le milieu gazeux ou fluide à partir de la station de base dentaire (109, 209, 309, 403) à la première extrémité du dispositif d'accouplement (313), et
dans lequel la première longueur de tuyau (407) peut être couplée sélectivement directement à la pièce à main dentaire (101, 201, 301, 401) et configurée pour acheminer le milieu gazeux ou fluide à partir du boîtier d'élément d'accouplement (405) à la pièce à main dentaire (101, 201, 301, 401).

14. Dispositif d'accouplement de la revendication 1, comprenant en outre un boîtier d'élément d'accouplement (405) comportant la première extrémité et la deuxième extrémité du dispositif d'accouplement (313),
dans lequel la première extrémité du boîtier d'élément d'accouplement (405) peut être couplée sélectivement à un premier tuyau couplant le boîtier d'élément d'accouplement (405) à la station de base dentaire (109, 209, 309, 403), et
dans lequel la deuxième extrémité du boîtier d'élément d'accouplement (405) peut être couplée sélectivement à un deuxième tuyau couplant le boîtier d'élément d'accouplement (405) à la pièce à main dentaire (101, 201, 301, 401).
